# EUROPEAN PATENT APPLICATION

(11) **EP 2 090 362 A1**
(43) Date of publication of application: **19.08.2009**
(21) Application number: 08101528.1
(22) Date of filing: 12.02.2008
(51) Int. Cl.: B01J 23/26, B01J 37/08, B01J 6/00, F27B 15/12

(54) **Apparatus and process for activating a catalyst**

(71) Applicant: INEOS Manufacturing Belgium NV, 2040 Antwerpen (BE)
(72) Inventor: The designation of the inventor has not yet been filed
(74) Representative: Smith, Julian Philip Howard

(57) **Abstract**

Apparatus for activating a catalyst is described, comprising means for passing high-temperature gases across a catalyst, a primary filter for filtering said gases, means for cooling the filtered gases, and a secondary filter for filtering the cooled gases which collects at least 99.97 % of all residual particles smaller than 0.3µm, wherein the secondary filter is disposable and/or has a design pressure less than 0.5 bar.

## Description

The present invention relates generally to a particulate filter, and more particularly to an apparatus for activating a catalyst which contains such a filter, and a process for activating a catalyst.

Many catalyst compositions are activated by subjecting the raw catalyst to elevated temperatures for a period of time, whilst passing over the catalyst a stream of a conditioning fluid which can be of any type - inert, non-oxidizing, non reducing, oxidizing or reducing, depending on the particular nature of the catalyst and its intended use. Typical catalyst activation processes comprise drying an activating fluid such as air, and then passing it through a catalyst bed whilst applying heat until the catalyst reaches the desired temperature or has lost some impurities. At this point the catalyst is held at the activation temperature, typically in the range 500 to 1000°C, for a specific length of time, whilst one or more gases are passed over it. Typical catalyst compositions are silica- or alumina-based, with chromium possibly mixed with other metals such as titanium.

In the case of catalysts containing chromium, after the activation process at least part of the chromium is in the hexavalent form Cr⁶⁺. This form is regarded as potentially carcinogenic. Thus extreme care is required not only in the handling of the activated catalyst, but also in dealing with the gas which has passed over the catalyst, as this may be carrying entrained fines containing hexavalent chromium.

Typical activation apparatus includes internal filters which retain most of the fine particles entrained with the gases. These filters usually consist of sintered metal cartridges which are resistant to the high activation temperatures employed, and also to the potentially abrasive and corrosive nature of the catalyst.

However, because of the harmful nature of the catalyst and the limited efficiency of the internal filters, additional external guard filters are required to filter the gases further, and collect any residual fines before the gases can be released to atmosphere.

In very old designs of activation apparatus, such as is disclosed in US 3141742 and US 3151944, the exhaust gases from the activation process are first passed through a cyclone, and then optionally cooled by passing through a cooler and/or by adding air, before being passed through external filters. The cyclone is installed on top of the apparatus so that the collected fines fall back into the apparatus. The external filters are bag filters and need to handle all the fines passing through the cyclone, which has a limited efficiency. External filters which collect a significant quantity of catalyst fines are likely to require a blow-back system, and are likely to be of limited efficiency. Handling of such bag filters for maintenance and replacement is also likely to be problematic due to contamination issues.

More recent activator designs include an internal filter instead of a cyclone. This has become possible due to the use of high performance materials, usually sintered metal filters, which can withstand repeated cycles of cooling and heating to high temperature, as well as the corrosive and abrasive nature of the catalyst, and the particular fluidisation gases employed. In addition, a complex blow-back sequence is usually employed, such that some of the filters can be in blow-back mode whilst others are in service. Typically such metallic filters have a cut off size of 3µm and can remove 98% of the particles of diameter above 1.3µm.

In order to collect the residual particles external guard filters are also installed, usually after a cooler in order to limit the temperature of the gases.

Common external guard filters are also made of expensive sintered metal cartridges similar to the internal filters, and usually include an expensive complex blow-back system requiring a lot of valves. Maintenance is normally limited, but occasionally the metallic filters need to be replaced or cleaned. Handling of the cartridges is difficult due to their brittleness, and cleaning requires specific ultrasonic treatment. Furthermore, installation of the equipment to house these filters, which includes the blow-back facility, is expensive.

We have now found a cheaper alternative for the filtration of the fines-containing gases exiting a catalyst activation apparatus. Accordingly in a first aspect the present invention provides apparatus for activating a catalyst, comprising means for passing high-temperature gases across a catalyst, a primary filter for filtering said gases, means for cooling the filtered gases, and a secondary filter for filtering the cooled gases which collects at least 99.97 % of all residual particles smaller than 0.3µm, wherein the secondary filter is disposable and/or has a design pressure less than 0.5 bar.

A further aspect of the invention provides a process for activating a Cr-containing catalyst, comprising passing high-temperature gases across a catalyst; passing said gases through a primary filter; cooling the filtered gases; and then passing the cooled gases through a secondary filter which collects at least 99.97 % of all residual particles smaller than 0.3µm, wherein the secondary filter is disposable and/or has a design pressure less than 0.5 bar.

With the secondary filters of the invention, complicated blow-back equipment is not necessary, as the filters can be discarded instead of being cleaned. Furthermore, the filters are much cheaper than sintered metal filters, and are also significantly easier to operate and maintain, thereby reducing both capital and maintenance costs.

Preferably the secondary filter is a high efficiency particulate arresting (HEPA) bag filter.

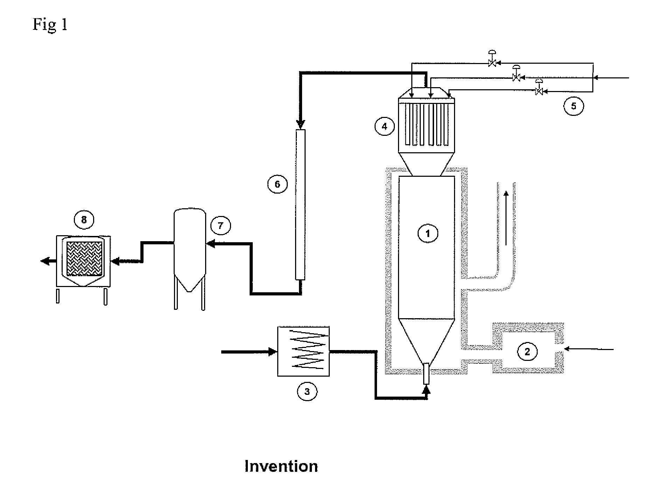

A preferred embodiment of the invention is shown in Figure 1. The exhaust gases from the activation apparatus 1, which have already passed through a standard internal filter 4, pass through a cooler 6 which significantly reduces the gas temperature, typically to below 250°C. The cooler can be a finned tube cooled by atmospheric air. The cooled gases then pass through a knock-out pot 7 to collect any condensed gas or water, before passing through the filter 8, which is preferably a high efficiency particulate arresting (HEPA) bag filter. Such filters may be made for example from glass fibres, and are disposable cartridges. They have a housing designed with a "bag-in bag-out" service which permits replacement of the filter cartridges without exposing the maintenance personnel to the hazardous particles.

The following Examples describe the filtration process for the gases used in a catalyst activation apparatus, after the gases have been passed across the catalyst.

### EXAMPLE 1 (comparative)

In this Example, the external filter employed is a non-disposable sintered metal filter.

A flow of 92 m³/h (at 25°C) of exhaust gases exit the internal sintered metal filters at a temperature of 675°C. The gases pass through a finned tube cooler having a cumulative length of 10m and cooled by ambient air, which reduces their temperature to 45°C.

The gases are then passed through an external sintered metal filter. It consists of four series of two metallic filters, 63mm in diameter by 965mm in length, made of porous 316SS stainless steel and having a specification to collect 99.7% of all particles smaller than 0.3µm, and 100% of all particles smaller than 3µm. A blow-back sequence fires automatically each of the four filters in turn.

### EXAMPLE 2

In this Example, the external filter employed is a disposable HEPA filter.

As in Example 1, a flow of 92 m³/h (at 25°C) of exhaust gases exit the internal sintered metal filters at a temperature of 675°C. The gases pass through a finned tube cooler having a cumulative length of 10m and cooled by ambient air, which reduces their temperature to 45°C.

The gases then pass through a 24-inch (609mm) knock-out pot prior to entering the external filter. A knock-out pot is employed because of the design of disposable filters, which do unlike sintered metal filters do not have a means for catching particles which fall out of the gas. The housing material of the external filter is made of stainless steel (and supplied by Camfil Farr) and permits a "bag-in- bag-out" arrangement. The filter itself is a 305mm x 305mm x 305mm HEPA filter, and is made of glass fibre. It retains a minimum of 99.97% of particles below 0.3µm. Two such filters are installed in parallel, although only one is in operation at any one time. There is no blow back system.

## Claims

1. Apparatus for activating a catalyst, comprising means for passing high-temperature gases across a catalyst, a primary filter for filtering said gases, means for cooling the filtered gases, and a secondary filter for filtering the cooled gases which collects at least 99.97 % of all residual particles smaller than 0.3µm, wherein the secondary filter is disposable and/or has a design pressure less than 0.5 bar.

2. Process for activating a chromium-containing catalyst, comprising passing high-temperature gases across a catalyst; passing said gases through a primary filter; cooling the filtered gases; and then passing the cooled gases through a secondary filter which collects at least 99.97 % of all residual particles smaller than 0.3µm, wherein the secondary filter is disposable and/or has a design pressure less than 0.5 bar.

3. Process according to claim 2, wherein the temperature of the gases entering the secondary filter is below 250°C.

4. Apparatus or process according to any preceding claim, wherein the secondary filter is made of fibre glass.

5. Apparatus or process according to any preceding claim, wherein the secondary filter is a high efficiency particulate arresting (HEPA) bag filter.
